# EUROPÄISCHE PATENTANMELDUNG

(11) **EP 3 037 780 A1**
(43) Veröffentlichungstag der Anmeldung: **29.06.2016**
(21) Anmeldenummer: 14200185.8
(22) Anmeldetag: 23.12.2014
(51) Int. Cl.: G01C 15/00, G01V 3/15

(54) **Verfahren zum Detektieren eines Messbereiches in einem Untergrund**

(71) Anmelder: HILTI Aktiengesellschaft, 9494 Schaan (LI)
(72) Erfinder: Gogolla, Torsten, 9494 Schaan (LI); Schoenbeck, Dietmar, 6811 Goefis (AT); Korl, Sascha, 9470 Buchs (CH); Neumann, Jens, 9472 Grabs (CH)
(74) Vertreter: Hilti Aktiengesellschaft Corporate Intellectual Property

(57) **Zusammenfassung**

Verfahren zum Detektieren eines Messbereiches in einem Untergrund (18) mittels einer Vorrichtung (10), die eine Detektoreinrichtung (11) mit einem Detektionsfeld, eine Lokalisierungseinrichtung (12) und eine Kontrolleinrichtung (13) aufweist, wobei:
▪ in einem ersten Schritt ein zu detektierender Messbereich (21) mit einer Startposition und Koordinaten ausgewählt wird, wobei die Abmessungen des zu detektierenden Messbereiches grösser sind als das Detektionsfeld der Detektoreinrichtung (11),
▪ in einem zweiten Schritt mittels der Lokalisierungseinrichtung (12) eine aktuelle Position (Pₐₖₜ) der Detektoreinrichtung (11) bestimmt wird,
▪ in einem dritten Schritt von der Kontrolleinrichtung (13) aus der aktuellen Position (Pₐₖₜ) der Detektoreinrichtung (11) ein aktuelles Detektionsfeld bestimmt wird und
▪ in einem vierten Schritt die Startposition des zu detektierenden Messbereiches von der Kontrolleinrichtung (13) mit dem aktuellen Detektionsfeld verglichen wird.

## Beschreibung

### Technisches Gebiet

Die vorliegende Erfindung betrifft ein Verfahren zum Detektieren eines Messbereiches in einem Untergrund gemäß dem Oberbegriff des Anspruchs 1.

### Stand der Technik

Aus DE 20 2010 016 564 U1 ist eine Vorrichtung zum Detektieren von Objekten in einem Untergrund bekannt. Die Vorrichtung umfasst eine Detektoreinrichtung, eine Lokalisierungseinrichtung und eine Kontrolleinrichtung. Der Bediener bewegt die Detektoreinrichtung über den Untergrund, wobei die Detektoreinrichtung eine Reihe von Messungen ausführt. Die Lokalisierungseinrichtung ermittelt während des Messbetriebs regelmäßig die aktuelle Position der Detektoreinrichtung. Die Messdaten der Detektoreinrichtung und die Positionsdaten der Lokalisierungseinrichtung werden an die Kontrolleinrichtung übermittelt, die die Mess- und Positionsdaten zuordnet und speichert. Die Mess- und Ortsdaten können von der Kontrolleinrichtung weiter verarbeitet und beispielsweise auf einem Bildschirm dargestellt werden.

### Darstellung der Erfindung

Die Aufgabe der vorliegenden Erfindung besteht in der Entwicklung eines Verfahrens zum Detektieren eines Messbereiches in einem Untergrund.

Diese Aufgabe wird bei dem eingangs genannten Verfahren zum Detektieren eines Messbereiches in einem Untergrund erfindungsgemäß durch die Merkmale des unabhängigen Anspruchs 1 gelöst. Vorteilhafte Weiterbildungen sind in den abhängigen Ansprüchen angegeben.

Erfindungsgemäß ist das Verfahren zum Detektieren eines Messbereiches in einem Untergrund mittels einer Vorrichtung, die eine Detektoreinrichtung mit einem Detektionsfeld, eine Lokalisierungseinrichtung und eine Kontrolleinrichtung aufweist, dadurch gekennzeichnet, dass:
▪ in einem ersten Schritt ein zu detektierender Messbereich mit einer Startposition und Soll-Koordinaten ausgewählt wird, wobei die Abmessungen des zu detektierenden Messbereiches grösser sind als das Detektionsfeld der Detektoreinrichtung,
▪ in einem zweiten Schritt mittels der Lokalisierungseinrichtung eine aktuelle Position der Detektoreinrichtung bestimmt wird,
▪ in einem dritten Schritt von der Kontrolleinrichtung aus der aktuellen Position der Detektoreinrichtung ein aktuelles Detektionsfeld bestimmt wird und
▪ in einem vierten Schritt die Startposition des zu detektierenden Messbereiches von der Kontrolleinrichtung mit dem aktuellen Detektionsfeld der Detektoreinrichtung verglichen werden.

Das erfindungsgemäße Verfahren befasst sich damit, einen Messbereich in einem Untergrund zu detektieren und Objekte, die im Untergrund eingebettet sind, zu erfassen. Unter dem Begriff "Objekt" werden sämtliche Elemente, die in einem Untergrund angeordnet sind, zusammengefasst. Beispiele für Objekte, die mittels der Detektoreinrichtung bestimmt werden, sind Stromleitungen, Rundfunkleitungen, Leerrohre, Wasserleitungen, Heizungsrohre und Armierungseisen.

Wenn die Startposition außerhalb des aktuellen Detektionsfeldes angeordnet ist, wird aus der aktuellen Position der Detektoreinrichtung und der Startposition des zu detektierenden Messbereiches von der Kontrolleinrichtung eine Verstellanweisung für die Detektoreinrichtung berechnet und auf einer Anzeigeeinrichtung dargestellt. Durch die Verstellanweisung wird der Bediener angeleitet, wie die Detektoreinrichtung über den Untergrund zu bewegen ist.

Wenn die Startposition des zu detektierenden Messbereiches innerhalb des aktuellen Detektionsfeldes angeordnet ist, wird von der Kontrolleinrichtung ein Steuerbefehl, mindestens eine Messung im Untergrund auszuführen, an die Detektoreinrichtung erteilt. Das Verfahren hat den Vorteil, dass das Auslösen der Messungen von der Kontrolleinrichtung gesteuert wird.

Wenn die Startposition des zu detektierenden Messbereiches innerhalb des aktuellen Detektionsfeldes angeordnet ist, wird von der Kontrolleinrichtung eine Bedienungsanweisung, die Detektoreinrichtung anzuhalten, erstellt und auf einer Anzeigeeinrichtung dargestellt. Besonders bevorzugt wird von der Kontrolleinrichtung ein Steuerbefehl, mindestens eine Messung im Untergrund auszuführen, an die Detektoreinrichtung erteilt, wenn die Startposition des zu detektierenden Messbereiches innerhalb des aktuellen Detektionsfeldes angeordnet ist und die Detektoreinrichtung nicht bewegt.

Besonders bevorzugt wird während der Messung mit der Detektoreinrichtung aus den Koordinaten des zu detektierenden Messbereiches und der aktuellen Position der Detektoreinrichtung von der Kontrolleinrichtung eine Verstellanweisung für die Detektoreinrichtung berechnet und auf einer Anzeigeeinrichtung dargestellt. Durch die Verstellanweisung wird der Bediener angeleitet, wie die Detektoreinrichtung über den Untergrund zu bewegen ist.

Bevorzugt werden mittels der Detektoreinrichtung mit einer Messfrequenz Messungen im Untergrund ausgeführt und die Messwerte mit einer ersten Übertragungsfrequenz von der Detektoreinrichtung an die Kontrolleinrichtung übermittelt.

Besonders bevorzugt wird die aktuelle Position der Detektoreinrichtung mit einer Lokalisierungsfrequenz von der Lokalisierungseinrichtung bestimmt und die Positionsdaten mit einer Übertragungsfrequenz von der Lokalisierungseinrichtung an die Kontrolleinrichtung übermittelt werden.

In einer bevorzugten Ausführung wird von der Kontrolleinrichtung ein Steuerbefehl, die Ausführung von Messungen im Untergrund zu unterbrechen, an die Detektoreinrichtung erteilt, wenn die Koordinaten des zu detektierenden Messbereiches außerhalb des aktuellen Detektionsfeldes angeordnet sind. Die Messungen mit der Detektoreinrichtung werden nur ausgeführt, wenn die Detektoreinrichtung richtig positioniert ist und sich die Koordinaten des Messbereiches im Detektionsfeld der Detektoreinrichtung befinden.

Besonders bevorzugt wird aus der aktuellen Position der Detektoreinrichtung und den Koordinaten des zu detektierenden Messbereiches von der Kontrolleinrichtung eine Verstellanweisung für die Detektoreinrichtung berechnet und auf einer Anzeigeeinrichtung dargestellt. Durch die Verstellanweisung wird der Bediener angeleitet, wie die Detektoreinrichtung über den Untergrund zu bewegen ist.

Besonders bevorzugt wird von der Kontrolleinrichtung ein Steuerbefehl, mindestens eine Messung im Untergrund auszuführen, an die Detektoreinrichtung erteilt, wenn die Koordinaten des zu detektierenden Messbereiches innerhalb des aktuellen Detektionsfeldes angeordnet sind. Das Verfahren hat den Vorteil, dass das Auslösen der Messungen von der Kontrolleinrichtung gesteuert wird. Die Messungen werden nur ausgeführt, wenn die Detektoreinrichtung richtig positioniert ist und sich die Koordinaten des Messbereiches im Detektionsfeld der Detektoreinrichtung befinden.

Besonders bevorzugt wird die Detektoreinrichtung mindestens zweifach über den zu detektierenden Messbereich geführt, wobei mittels der Detektoreinrichtung erste Messungen mit ersten Detektionsparametern und zweite Messungen mit zweiten Detektionsparametern ausgeführt werden. Durch die Messung mit verschiedenen Detektionsparametern können die Genauigkeit und Zuverlässigkeit der Messdaten erhöht werden. Unterschiedliche Objekte und Objekteigenschaften im Untergrund erfordern unterschiedliche Detektionsparameter.

In einer Weiterentwicklung ist das erfindungsgemäße Verfahren zusätzlich dadurch gekennzeichnet, dass im zweiten Schritt mittels der Lokalisierungseinrichtung neben der aktuellen Position der Detektoreinrichtung eine aktuelle Orientierung der Detektoreinrichtung bestimmt wird. Besonders bevorzugt wird im dritten Schritt das aktuelle Detektionsfeld der Detektoreinrichtung von der Kontrolleinrichtung aus der aktuellen Position und der aktuellen Orientierung der Detektoreinrichtung bestimmt. Durch die Bestimmung der aktuellen Orientierung wird die Genauigkeit, mit der die Ausrichtung der Detektoreinrichtung bestimmt werden kann, erhöht. Die aktuelle Orientierung der Detektoreinrichtung kann beispielsweise mit Hilfe einer Kamera oder durch Differenzbildung zwischen mehreren bekannten Markierungen, die auf der Detektoreinrichtung angebracht sind, bestimmt werden. Hier eignen sich alle bekannten Methoden, um die Orientierung eines Gegenstandes im Raum zu bestimmen.

Bevorzugt wird die aktuelle Orientierung der Detektoreinrichtung in allen Verfahrensschritten des erfindungsgemäßen Verfahrens zusätzlich berücksichtigt, die die aktuelle Position der Detektoreinrichtung heranziehen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: die Anwendung einer Vorrichtung zum Detektieren eines Messbereiches in einem als Rückwand ausgebildeten Untergrund mit einer Detektoreinrichtung, einer Lokalisierungseinrichtung und einer Kontrolleinrichtung;
- FIG. 2: die Rückwand der FIG. 1 mit einem zu detektierenden Messbereich;
- FIG. 3: das Zusammenwirken der Detektoreinrichtung, der Lokalisierungseinrichtung und der Kontrolleinrichtung der in FIG. 1 gezeigten Vorrichtung in Form eines Blockdiagramms; und
- FIG. 4: eine Ausführungsvariante des erfindungsgemäßen Verfahrens zum Detektieren eines Messbereiches in Form eines Ablaufdiagramms.

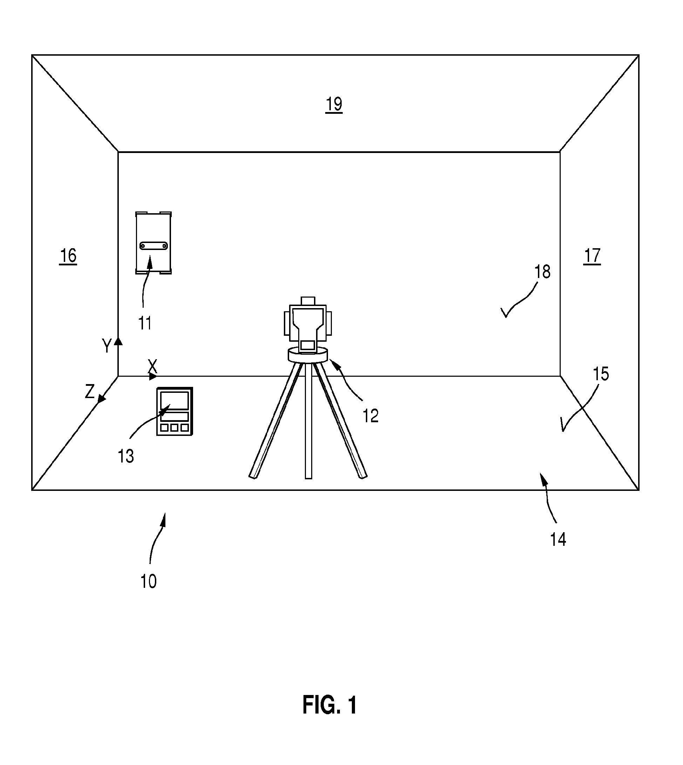

**FIG. 1** zeigt eine Vorrichtung **10** zur Durchführung des erfindungsgemäßen Verfahrens zum Überprüfen von Objekteigenschaften eines Objektes in einem Untergrund. Unter dem Begriff "Objekt" werden sämtliche Elemente, die in einem Untergrund angeordnet sind, zusammengefasst. Die Vorrichtung 10 umfasst eine Detektoreinrichtung **11**, eine Lokalisierungseinrichtung **12** und eine Kontrolleinrichtung **13**. Die Detektoreinrichtung 11, Lokalisierungseinrichtung 12 und Kontrolleinrichtung 13 sind als separate Komponenten ausgebildet, die über Kommunikationsleitungen verbindbar sind und miteinander kommunizieren können. Die Detektoreinrichtung 11 ist als handgeführte Detektoreinrichtung ausgebildet, die während der Messung über den Untergrund bewegt wird.

Bei Detektoreinrichtungen wird zwischen gehaltenen und geführten Detektoreinrichtungen unterschieden; eine gehaltene Detektoreinrichtung wird während der Messung ohne Vorschubbewegung über den zu detektierenden Untergrund gehalten und eine geführte Detektoreinrichtung wird während der Messung entlang einer linearen Bahn oder in einer beliebigen Bahn über den zu detektierenden Untergrund geführt.

Das erfindungsgemäße Verfahren wird anhand einer Messaufgabe in einem Innenraum **14** beschrieben. Der Innenraum 14 besteht aus einem Boden **15**, einer linken und rechten Seitenwand **16**, **17**, einer Rückwand **18** und einer Decke **19**. Die Begrenzungen 15-19 des Innenraumes 14 werden unter dem Begriff "Untergrund" zusammengefasst. Der Innenraum 14 wird von einem dreidimensionalen Koordinatensystem **X, Y, Z** aufgespannt, dessen Koordinatenursprung (0, 0, 0) in der linken, unteren Ecke zwischen Boden 15, linker Seitenwand 16 und Rückwand 18 angeordnet ist.

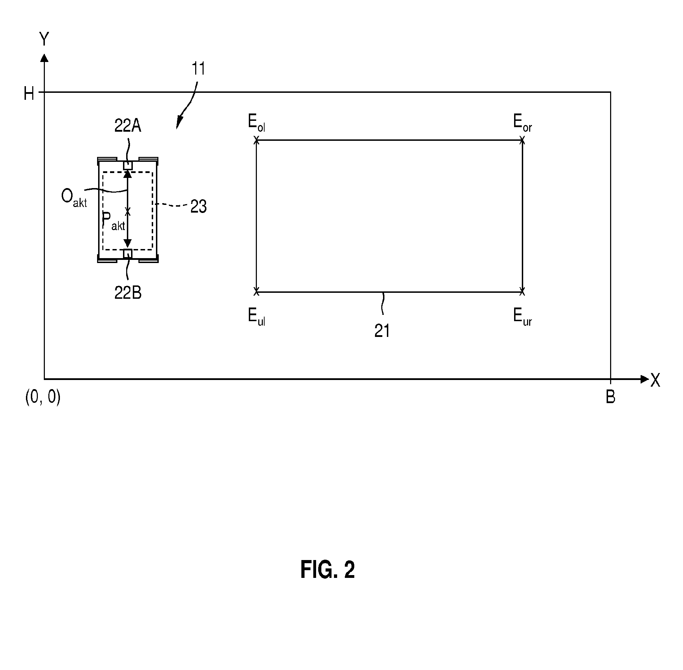

**FIG. 2** zeigt die Rückwand 18 des Innenraums 14 mit einem zu detektierenden Messbereich **21**. Die Rückwand 18 liegt in der XY-Ebene des Koordinatensystems und weist in X-Richtung eine Breite **B** und in Y-Richtung eine Höhe **H** auf.

Bevor mittels der Detektoreinrichtung 11 Messungen ausgeführt werden, muss die Detektoreinrichtung 11 über den Messbereich 21 positioniert werden. Dazu wird mittels der Lokalisierungseinrichtung 12 die aktuelle Position **Pₐₖₜ** mit den Koordinaten **xₐₖₜ, yₐₖₜ, zₐₖₜ** der Detektoreinrichtung 11 im Innenraum 14 bestimmt. Die aktuelle Position Pₐₖₜ der Detektoreinrichtung 11 wird mit Hilfe von zwei Lokalisierungsmarken **22A, 22B** bestimmt. Im Ausführungsbeispiel sind die Lokalisierungsmarken 22A, 22B auf der Oberseite der Detektoreinrichtung 11 angebracht. Aus der aktuellen Position Pₐₖₜ der Detektoreinrichtung 11 bestimmt die Kontrolleinrichtung 13 ein aktuelles Detektionsfeld **23** der Detektoreinrichtung 11. Zwischen den Positionen der Lokalisierungsmarken 22A, 22B und dem Detektionsfeld 23 der Detektoreinrichtung 11 besteht ein bekannter Zusammenhang. Eine aktuelle Orientierung Oₐₖₜ der Detektoreinrichtung 11 kann ebenfalls mit Hilfe der Lokalisierungsmarken 22A, 22B bestimmt werden. Nachdem die Kontrolleinrichtung 13 das aktuelle Detektionsfeld 23 der Detektoreinrichtung 11 bestimmt hat, wird die Startposition des Messbereiches 21 von der Kontrolleinrichtung 13 mit dem aktuellen Detektionsfeld 23 der Detektoreinrichtung 11 verglichen.

Der Messbereich 21 ist rechteckig ausgebildet und durch vier Eckpunkte **E**ᵤₗ, **E**ₒₗ, **Eₒᵣ, Eᵤᵣ** begrenzt. Als Startposition des Messbereiches 21 eignen sich die Eckpunkte.

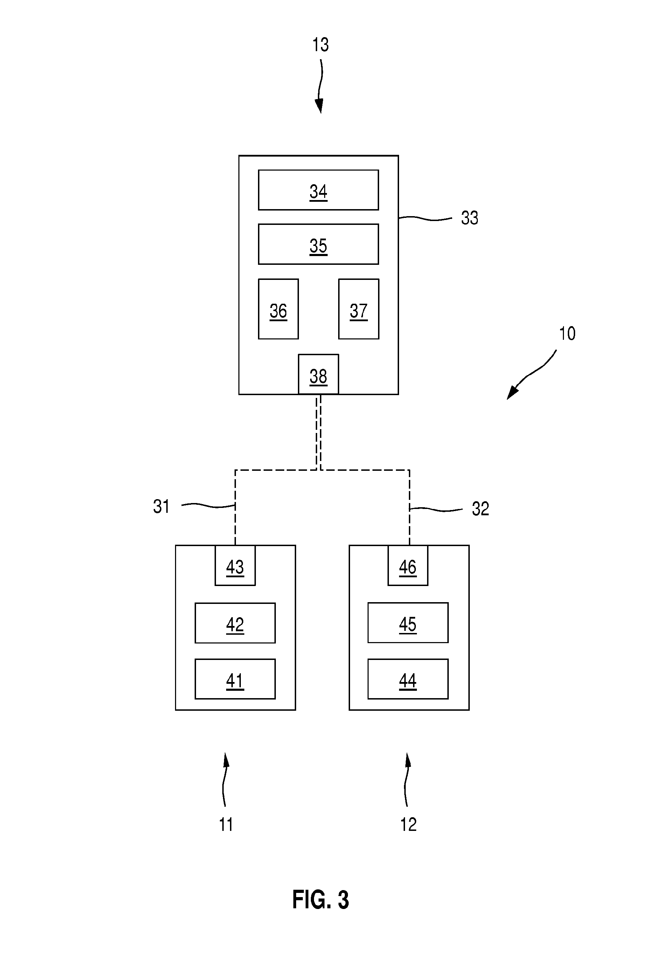

**FIG. 3** zeigt den Aufbau und das Zusammenwirken der Detektoreinrichtung 11, der Lokalisierungseinrichtung 12 und der Kontrolleinrichtung 13 in Form eines Blockdiagramms. Die Detektoreinrichtung 11, Lokalisierungseinrichtung 12 und Kontrolleinrichtung 13 sind im Ausführungsbeispiel als separate Komponenten ausgebildet, die über Kommunikationsverbindungen miteinander kommunizieren können.

Die Detektoreinrichtung 11 und die Kontrolleinrichtung 13 sind über eine erste Kommunikationsverbindung **31** miteinander verbindbar. Die Kontrolleinrichtung 13 ist über eine zweite Kommunikationsverbindung **32** mit der Lokalisierungseinrichtung 12 verbindbar. Die Kommunikationsverbindungen können als kabellose Kommunikationsverbindungen, beispielsweise als Funk-, Infrarot-, Bluetooth-, WLAN- oder Wi-Fi-Verbindungen, oder als kabelgebundene Kommunikationsverbindungen ausgebildet sein. Neben den aufgeführten kabellosen Verbindungstechnologien eignen sich sämtliche bereits bekannten und zukünftigen kabellosen Verbindungstechnologien zur Daten- und Bildübertragung.

Die Kontrolleinrichtung 13 umfasst ein Gehäuse **33**, in das eine Bedieneinrichtung **34** und ein Anzeigeeinrichtung **35** integriert sind. Die Bedieneinrichtung 34 und die Anzeigeeinrichtung 35 können wie in FIG. 2 gezeigt als separate Teile ausgebildet oder gemeinsam beispielsweise in einen Touchscreen integriert sein. Die Kontrolleinrichtung 13 weist außerdem ein Auswerte- und Steuerelement **36**, ein Speicherelement **37** und ein erstes Sende- und Empfangselement **38** auf.

Die Detektoreinrichtung 11 umfasst eine Sensoreinrichtung **41**, ein Steuerelement **42** zur Steuerung der Sensoreinrichtung 41 und ein zweites Sende- und Empfangselement **43**. Ausgehend vom ersten Sende- und Empfangselement 38 der Kontrolleinrichtung 13 wird die erste Kommunikationsverbindung zum zweiten Sende- und Empfangselement 43 der Detektoreinrichtung 11 aufgebaut. Die Steuerbefehle für die Detektoreinrichtung 11 werden von der Kontrolleinrichtung 13 über die erste Kommunikationsverbindung 31 an das Steuerelement 42 der Detektoreinrichtung 23 übermittelt. Die Sensoreinrichtung weist ein einzelnes Sensorelement oder mehrere Sensorelemente auf; die Sensorelemente können als induktive Sensoren, kapazitive Sensoren, Radarsensoren, Magnetfeldsensoren oder als sonstige, zum Detektieren von Objekten in Untergründen geeignete Sensoren ausgebildet sein.

Die Lokalisierungseinrichtung 12 umfasst eine Messeinrichtung **44**, ein Steuer- und Auswerteelement **45** zur Steuerung der Messeinrichtung 44 und zur Auswertung der Messwerte sowie ein drittes Sende- und Empfangselement **46.** Die Lokalisierungseinrichtung 12 ist beispielsweise als Totalstation und die Messeinrichtung 44 als Abstands- und Winkelmesseinrichtung ausgebildet. Ausgehend vom ersten Sende- und Empfangselement 38 der Kontrolleinrichtung 13 wird die zweite Kommunikationsverbindung 32 zum dritten Sende- und Empfangselement 46 der Lokalisierungseinrichtung 12 aufgebaut.

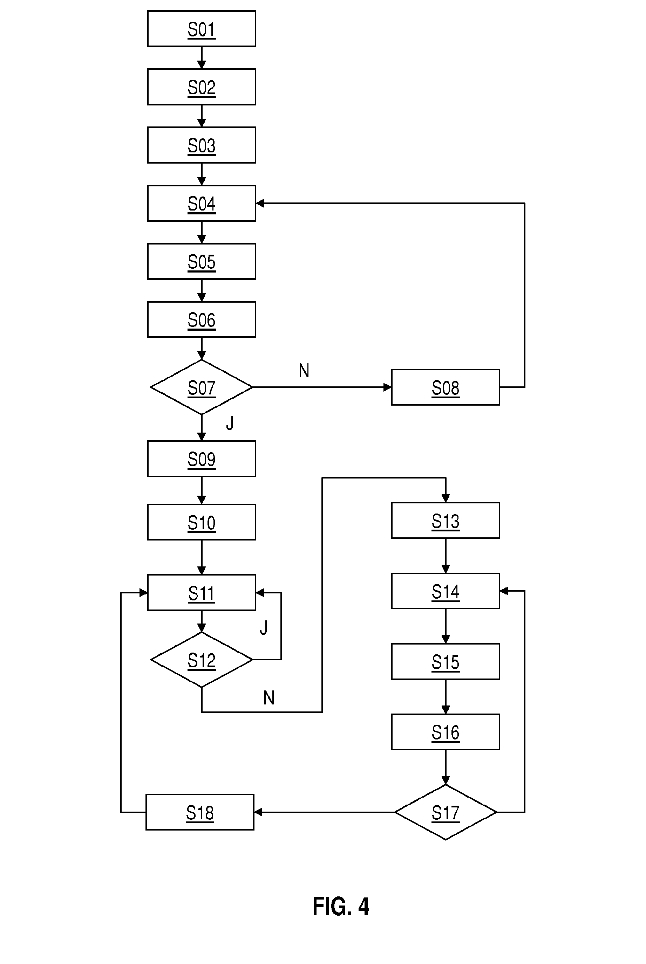

**FIG. 4** zeigt das erfindungsgemäße Verfahren zum Detektieren eines Messbereiches in einem Untergrund anhand eines Ablaufdiagramms. Das Verfahren wird anhand des Messbereiches 21 der FIG. 2 beschrieben, der in der Rückwand 18 angeordnet ist.

Der Bediener wählt in einem Schritt **S01** mittels der Bedieneinrichtung 34 den zu detektierenden Messbereich 21 mit der Startposition Eᵤₗ und den Koordinaten aus; der Messbereich 21 in einem Schritt **S02** in die Kontrolleinrichtung 13 geladen wird. Vor dem Start des Verfahrens kann der Bediener einen der Eckpunkte als Startposition festlegen oder die Kontrolleinrichtung 13 entscheidet während der Durchführung des Verfahrens, welcher der Eckpunkte näher liegt, und definiert diesen als Startposition. Im Ausführungsbeispiel der FIG. 4 ist der linke untere Endpunkt Eᵤₗ des Messbereiches 21 als Startposition definiert.

Der Bediener startet in einem Schritt **S03** die Ausführung des Verfahrens. Nach dem Start in Schritt S03 bestimmt die Lokalisierungseinrichtung 12 in einem Schritt **S04** die aktuelle Position Pₐₖₜ und aktuelle Orientierung Oₐₖₜ der Detektoreinrichtung 11 auf der Rückwand 18, die in einem Schritt **S05** von der Lokalisierungseinrichtung 12 an die Kontrolleinrichtung 13 übermittelt wird. In einem Schritt **S06** bestimmt die Kontrolleinrichtung 13 aus der aktuellen Position und Orientierung Pₐₖₜ, Oₐₖₜ das aktuelle Detektionsfeld 23 der Detektoreinrichtung 11 und vergleicht die Startposition in einem Schritt **S07** mit dem aktuellen Detektionsfeld 23. Dabei prüft die Kontrolleinrichtung 13 in Schritt S07, ob die Startposition Eᵤₗ des zu detektierenden Messbereiches 21 innerhalb des aktuellen Detektionsfeldes 23 angeordnet ist.

Ist die Startposition Eᵤₗ des Messbereiches 21 außerhalb des aktuellen Detektionsfeldes 23 angeordnet (N in S07), erstellt die Kontrolleinrichtung 13 in einem Schritt **S08** aus der aktuellen Position und Orientierung Pₐₖₜ, Oₐₖₜ der Detektoreinrichtung 11 und der Startposition Eᵤₗ eine Verstellanweisung für die Detektoreinrichtung 11, die auf der Anzeigeeinrichtung 35 dargestellt wird. Das erfindungsgemäße Verfahren wird mit Schritt S04 fortgesetzt. Wenn die Startposition Eᵤₗ innerhalb des aktuellen Detektionsfeldes 23 angeordnet ist (J in S07), erteilt die Kontrolleinrichtung 13 in einem Schritt **S09** einen Steuerbefehl an die Detektoreinrichtung 11, mit einer Messfrequenz im Untergrund 18 Messungen auszuführen, und bestimmt in einem Schritt **S10** aus der aktuellen Position und Orientierung Pₐₖₜ, Oₐₖₜ und den Koordinaten des Messbereiches 21 eine Verstellanweisung, wie die Detektoreinrichtung 11 über den zu detektierenden Messbereich 21 zu verfahren ist. Die Lokalisierungseinrichtung 12 bestimmt in einem Schritt **S11** die aktuelle Position und Orientierung Pₐₖₜ, Oₐₖₜ mit einer Lokalisierungsfrequenz und übermittelt die Positionsdaten an die Kontrolleinrichtung 13. Die Kontrolleinrichtung 13 bestimmt aus der aktuellen Position und Orientierung Pₐₖₜ, Oₐₖₜ das aktuelle Detektionsfeld 23 und vergleicht die Koordinaten des zu detektierenden Messbereiches 21 in einem Schritt **S12** mit dem aktuellen Detektionsfeld 23.

Sind die Koordinaten des Messbereiches 21 innerhalb des aktuellen Detektionsfeldes 23 angeordnet (J in S12), wird das erfindungsgemäße Verfahren mit Schritt S11 fortgesetzt. Wenn die Koordinaten des Messbereiches 21 außerhalb des aktuellen Detektionsfeldes 23 angeordnet sind (N in S12), erteilt die Kontrolleinrichtung 13 in einem Schritt **S13** einen Steuerbefehl an die Detektoreinrichtung 11, die Messungen im Untergrund 18 zu unterbrechen. Die Kontrolleinrichtung 13 bestimmt in einem Schritt **S14** aus der aktuellen Position und Orientierung Pₐₖₜ, Oₐₖₜ der Detektoreinrichtung 11 und den Koordinaten des Messbereiches 21 eine Verstellanweisung, die auf der Anzeigeeinrichtung 35 dargestellt wird.

Die aktuelle Position und Orientierung Pₐₖₜ, Oₐₖₜ der Detektoreinrichtung 11 werden in einem Schritt **S15** von der Lokalisierungseinrichtung 12 bestimmt und an die Kontrolleinrichtung 13 übermittelt. Die Kontrolleinrichtung 13 bestimmt in einem Schritt **S16** aus der aktuellen Position und Orientierung Pₐₖₜ, Oₐₖₜ der Detektoreinrichtung 11 das aktuelle Detektionsfeld 23 und vergleicht die Koordinaten des zu detektierenden Messbereiches 21 in einem Schritt **S17** mit dem aktuellen Detektionsfeld 23. Dabei prüft die Kontrolleinrichtung 13 in Schritt S17, ob die Koordinaten des zu detektierenden Messbereiches 21 innerhalb des aktuellen Detektionsfeldes 23 angeordnet sind.

Wenn die Koordinaten des Messbereiches 21 außerhalb des aktuellen Detektionsfeldes 23 angeordnet sind (N in S17), wird das erfindungsgemäße Verfahren mit Schritt S14 fortgesetzt. Wenn die Koordinaten des Messbereiches 21 innerhalb des aktuellen Detektionsfeldes 23 angeordnet sind (J in S17), erstellt die Kontrolleinrichtung 13 in einem Schritt **S18** einen Steuerbefehl an die Detektoreinrichtung 11, die Messungen im Untergrund 18 fortzusetzen. Das erfindungsgemäße Verfahren wird mit Schritt S fortgesetzt.

## Patentansprüche

1. Verfahren zum Detektieren eines Messbereiches (21) in einem Untergrund (18) mittels einer Vorrichtung (10), die eine Detektoreinrichtung (11) mit einem Detektionsfeld (23), eine Lokalisierungseinrichtung (12) und eine Kontrolleinrichtung (13) aufweist, wobei:
▪ in einem ersten Schritt ein zu detektierender Messbereich (21) mit einer Startposition (Eᵤₗ) und Koordinaten (Eᵤₗ, Eₒₗ, Eₒᵣ, Eᵤᵣ) ausgewählt wird, wobei die Abmessungen des zu detektierenden Messbereiches (21) grösser sind als das Detektionsfeld (23) der Detektoreinrichtung (11),
▪ in einem zweiten Schritt mittels der Lokalisierungseinrichtung (12) eine aktuelle Position (Pₐₖₜ) der Detektoreinrichtung (11) bestimmt wird,
▪ in einem dritten Schritt von der Kontrolleinrichtung (13) aus der aktuellen Position (Pₐₖₜ) der Detektoreinrichtung (11) ein aktuelles Detektionsfeld (23) bestimmt wird und
▪ in einem vierten Schritt die Startposition des zu detektierenden Messbereiches von der Kontrolleinrichtung (13) mit dem aktuellen Detektionsfeld (23) verglichen wird.

2. Verfahren nach Anspruch 1, **dadurch gekennzeichnet, dass** aus der aktuellen Position (Pₐₖₜ) der Detektoreinrichtung (11) und der Startposition des zu detektierenden Messbereiches (23) von der Kontrolleinrichtung (13) eine Verstellanweisung für die Detektoreinrichtung (11) berechnet und auf einer Anzeigeeinrichtung (35) dargestellt wird, wenn die Startposition (Eᵤₗ) außerhalb des aktuellen Detektionsfeldes (23) angeordnet ist.

3. Verfahren nach Anspruch 1, **dadurch gekennzeichnet, dass** von der Kontrolleinrichtung (13) ein Steuerbefehl, mindestens eine Messung im Untergrund (18) auszuführen, an die Detektoreinrichtung (11) erteilt wird, wenn die Startposition (Eᵤₗ) des zu detektierenden Messbereiches innerhalb des aktuellen Detektionsfeldes (23) angeordnet ist.

4. Verfahren nach Anspruch 1, **dadurch gekennzeichnet, dass** von der Kontrolleinrichtung (13) eine Bedienungsanweisung, die Detektoreinrichtung (11) anzuhalten, erstellt und auf einer Anzeigeeinrichtung (35) dargestellt wird, wenn die Startposition (Eᵤₗ) des zu detektierenden Messbereiches (21) innerhalb des aktuellen Detektionsfeldes (23) angeordnet ist.

5. Verfahren nach Anspruch 4, **dadurch gekennzeichnet, dass** von der Kontrolleinrichtung (13) ein Steuerbefehl, mindestens eine Messung im Untergrund (18) auszuführen, an die Detektoreinrichtung (11) erteilt wird, wenn die Startposition des zu detektierenden Messbereiches (21) innerhalb des aktuellen Detektionsfeldes (23) angeordnet ist und die Detektoreinrichtung (11) nicht bewegt wird.

6. Verfahren nach einem der Ansprüche 3 oder 5, **dadurch gekennzeichnet, dass** während der Messung mit der Detektoreinrichtung (11) aus den Koordinaten (Eᵤₗ, Eₒₗ, Eₒᵣ, Eᵤᵣ) des zu detektierenden Messbereiches (21) und der aktuellen Position (Pₐₖₜ) der Detektoreinrichtung (11) von der Kontrolleinrichtung (13) eine Verstellanweisung für die Detektoreinrichtung (11) berechnet und auf einer Anzeigeeinrichtung (35) dargestellt wird.

7. Verfahren nach Anspruch 6, **dadurch gekennzeichnet, dass** mittels der Detektoreinrichtung (11) mit einer Messfrequenz Messungen im Untergrund (18) ausgeführt werden und die Messwerte mit einer ersten Übertragungsfrequenz von der Detektoreinrichtung (11) an die Kontrolleinrichtung (13) übermittelt werden.

8. Verfahren nach einem der Ansprüche 6 bis 7, **dadurch gekennzeichnet, dass** die aktuelle Position (Pₐₖₜ) der Detektoreinrichtung (11) mit einer Lokalisierungsfrequenz von der Lokalisierungseinrichtung (12) bestimmt wird und die Positionsdaten mit einer zweiten Übertragungsfrequenz von der Lokalisierungseinrichtung (12) an die Kontrolleinrichtung (13) übermittelt werden.

9. Verfahren nach Anspruch 6, **dadurch gekennzeichnet, dass** von der Kontrolleinrichtung (13) ein Steuerbefehl, die Ausführung von Messungen im Untergrund (18) zu unterbrechen, an die Detektoreinrichtung (11) erteilt wird, wenn die Koordinaten (Eᵤₗ, Eₒₗ, Eₒᵣ, Eᵤᵣ) des zu detektierenden Messbereiches (21) außerhalb des aktuellen Detektionsfeldes (23) angeordnet sind.

10. Verfahren nach Anspruch 9, **dadurch gekennzeichnet, dass** aus der aktuellen Position (Pₐₖₜ) der Detektoreinrichtung (11) und den Koordinaten (Eᵤₗ, Eₒₗ, Eₒᵣ, Eᵤᵣ) des zu detektierenden Messbereiches (21) von der Kontrolleinrichtung (13) eine Verstellanweisung für die Detektoreinrichtung (11) berechnet und auf einer Anzeigeeinrichtung (35) dargestellt wird.

11. Verfahren nach Anspruch 10, **dadurch gekennzeichnet, dass** von der Kontrolleinrichtung (13) ein Steuerbefehl, mindestens eine Messung im Untergrund (18) auszuführen, an die Detektoreinrichtung (11) erteilt wird, wenn die Koordinaten (Eᵤₗ, Eₒₗ, Eₒᵣ, Eᵤᵣ) des zu detektierenden Messbereiches (21) innerhalb des aktuellen Detektionsfeldes (23) angeordnet sind.

12. Verfahren nach Anspruch 7, **dadurch gekennzeichnet, dass** die Detektoreinrichtung (11) mindestens zweifach über den zu detektierenden Messbereich (23) geführt wird, wobei mittels der Detektoreinrichtung (11) erste Messungen mit ersten Detektionsparametern und zweite Messungen mit zweiten Detektionsparametern ausgeführt werden.

13. Verfahren nach Anspruch 1, **dadurch gekennzeichnet, dass** im zweiten Schritt mittels der Lokalisierungseinrichtung (12) zusätzlich eine aktuelle Orientierung (Oₐₖₜ) der Detektoreinrichtung (11) bestimmt wird.

14. Verfahren nach Anspruch 13, **dadurch gekennzeichnet, dass** im dritten Schritt das aktuelle Detektionsfeld (27) der Detektoreinrichtung (11) aus der aktuellen Position (Pₐₖₜ) und der aktuellen Orientierung (Oₐₖₜ) der Detektoreinrichtung (11) bestimmt wird.
